# EUROPÄISCHE PATENTSCHRIFT

(11) **EP 1 612 901 B1**
(45) Veröffentlichungstag und Bekanntmachung des Hinweises auf die Patenterteilung: **22.06.2016**
(21) Anmeldenummer: 05013710.8
(22) Anmeldetag: 24.06.2005
(51) Int. Cl.: H02G 3/04

(54) **Versorgungseinrichtung zur Bereitstellung von Versorgungsmedien**
Supply device for supplying medical supplies
Dispositif d' alimentation pour distribution de produits médicaux.

(30) Priorität: 25.06.2004 DE 102004030799
(43) Veröffentlichungstag der Anmeldung: 04.01.2006
(73) Patentinhaber: Zumtobel Lighting GmbH, 61250 Usingen (DE)
(72) Erfinder: Gujénas, Stanislaus, 65439 Flörsheim (DE)
(74) Vertreter: Schmidt-Evers, Jürgen

(56) Entgegenhaltungen:
- EP-A- 0 683 553
- FR-A1- 2 588 753
- US-A- 4 104 710
- US-A- 4 720 768
- US-A- 5 107 636

## Beschreibung

Die vorliegende Erfindung betrifft eine Versorgungseinrichtung, die zur Bereitstellung von Versorgungsmedien vorgesehen ist, insbesondere zur Bereitstellung von technischen Gasen wie Sauerstoff und/oder Druckluft sowie von Strom.

Versorgungseinrichtungen der angesprochenen Art kommen beispielsweise in Krankenhäusern zum Einsatz und dienen hier dazu, die zur Patientenbehandlung am häufigsten benötigten Medien standardmäßig zur Verfügung zu stellen. Bei diesen Versorgungsmedien handelt es sich insbesondere um Sauerstoff, Druckluft und Strom, die bei einer Vielzahl von Behandlungen zum Einsatz kommen. Da diese Medien sehr häufig gebraucht werden, wäre es zu aufwendig, entsprechende Versorgungsmittel im Bedarfsfall jedesmal von neuem zur Verfügung zu stellen. Stattdessen werden diese Versorgungseinrichtungen in der Regel standardmäßig in Patientenzimmern in der Nähe der Stellplätze für die Krankenbetten installiert, so dass die Medien jederzeit verfügbar sind.

Die bislang zum Einsatz kommenden Versorgungseinrichtungen bestanden üblicherweise aus Metallkästen oder -körpern, die in der Nähe des Patientenbettes an der Wand befestigt waren und an ihrer Vorderseite entsprechende Anschlüsse für die zur Verfügung gestellten Medien aufwiesen. In letzter Zeit geht allerdings der Trend vermehrt dahin, derartige Einrichtungen großflächiger auszubilden. Hierdurch besteht die Möglichkeit, diese Versorgungseinrichtungen auch optisch ansprechender auszugestalten, was bspw. durch den Einsatz von Verkleidungselementen aus bestimmten Materialien wie z.B. Holz erfolgen kann.

Zu berücksichtigen bei der Entwicklung neuer Versorgungseinrichtungen ist allerdings, dass es sich hierbei um Einrichtungen handelt, die lediglich in einer verhältnismäßig geringen Stückzahl hergestellt werden. Komplizierte konstruktive Ausgestaltungen zur Halterung und Lagerung der wesentlichen Komponenten der Versorgungseinrichtung würden dementsprechend zu einer zusätzlichen Steigerung der Herstellungskosten führen, die nicht erwünscht ist. Darüber hinaus ist zu berücksichtigen, dass derartige Einrichtungen derart ausgestaltet sein sollten, dass sie möglichst einfach und schnell gewartet werden können.

Aus der Schrift US 4,720,768 ist ein Schienensystem mit einem Gehäuse bekannt, das aus zwei miteinander verrastbaren Profilelementen zusammengesetzt ist. Im Inneren des Gehäuses verlaufen elektrische Leitungen, wobei in einem der beiden Profilelemente Anschlussdosen für die Leitungen angeordnet sind.

Aus der EP 0 683 553 A1 ist ein modulares System für eine kombinierte Abgabe von Flüssigkeiten und Strom bekannt. Das System umfasst einen Lagerbügel, an dem Gasleitungen gehaltert sind, sowie kastenförmige Bauelemente für Anschlusseinheiten der Leitungen.

Der vorliegenden Erfindung liegt dementsprechend die Aufgabe zugrunde, eine Versorgungseinrichtung zur Bereitstellung von Versorgungsmedien anzugeben, bei der eine einfache Montage und Halterung der wesentlichen Komponenten ermöglicht ist und bei der darüber hinaus Wartungsarbeiten in einfacher und schneller Weise durchgeführt werden können.

Die Aufgabe wird durch eine Versorgungseinrichtung, welche die Merkmale des Anspruchs 1 aufweist, gelöst. Die erfindungsgemäße Lösung zeichnet sich insbesondere durch ihren einfachen Aufbau aus, durch den eine schnelle und problemlose Installation der wesentlichen Komponenten der Versorgungseinrichtung ermöglicht wird. Darüber hinaus ist bei der erfindungsgemäßen Lösung sichergestellt, dass in einfacher Weise ein Zugang zu den wesentlichen Komponenten der Versorgungseinrichtung erhalten werden kann, um etwaige Wartungsarbeiten durchführen zu können. Außerdem eröffnet die vorliegende Erfindung die Möglichkeit der Realisierung großflächiger Versorgungseinrichtungen, welche beispielsweise in optisch ansprechender Weise mit bestimmten Materialien wie z.B. Holz verkleidet werden können.

Gemäß der vorliegenden Erfindung weist die Versorgungseinrichtung zunächst einen ersten Profilkörper auf, der zur mittelbaren oder unmittelbaren Befestigung an einer Wand oder an einem Wandelement ausgebildet ist und einen halboffenen Raum bildet, in den Zuführungen für Anschlusseinheiten für die Versorgungsmedien münden. Ferner ist ein zweiter Profilkörper vorgesehen, der komplementär zu dem ersten Profilkörper ausgestaltet ist und zur Abdeckung des halboffenen Raums mit dem ersten Profilkörper werkzeuglos verrastbar ist. Darüber hinaus weist eine Bodenfläche des zweiten Profilkörpers Durchbrüche für Anschlußelemente der Anschlußeinheiten auf. Das bzw. die Anschlusselemente können dabei sowohl mit der Bodenfläche des zweiten Profilkörpers bündig abschließen als auch über die Bodenfläche leicht hervorstehen.

Erfindungsgemäß sind somit die zur Bereitstellung der Versorgungsmedien erforderlichen Komponenten, also insbesondere die Anschlusseinheiten in einem Raum gelagert, der durch zwei miteinander verbindbare Profilkörper gebildet wird. Vom Vorteil hierbei ist insbesondere, dass die Profilkörper miteinander verrastbar sind, so dass ein einfaches Abdecken dieses Aufnahmeraums ermöglicht wird. Gleichzeitig kann allerdings - sofern erforderlich - auf verhältnismäßig einfache Weise ein Zugang zu dem Raum und damit zu den Anschlusseinrichtungen erhalten werden, indem bspw. der zweite Profilkörper mittels eines Blechhebers von dem ersten Profilkörper abgenommen wird.

Beide Profilkörper sind im Querschnitt gesehen vorzugsweise U-förmig ausgestaltet und können insbesondere durch Aluminium-Strangpressprofile gebildet werden.

Die Anschlusseinheiten für die verschiedenen Versorgungsmedien können unmittelbar an dem ersten Profilkörper - bspw. mittels Verschrauben - befestigt sein. Alternativ dazu besteht allerdings auch die Möglichkeit, einen Zwischenträger in dem ersten Profilkörper zu befestigen, der zur Halterung der Anschlusseinheiten dient.

Erfindungsgemäß ist eine sog. Unterkonstruktion vorgesehen, über welche die Profilkörper an der Wand befestigt sind. Insbesondere kann diese Unterkonstruktion aus mehreren zusammengefügten länglichen Profilelementen bestehen, welche miteinander verschraubt sind und hierfür bspw. im Querschnitt gesehen quadratisch ausgestaltet sind und an drei ihrer Längsseiten entsprechende Schraubkanäle aufweisen. Diese Unterkonstruktion bildet dann ein einfaches Gerüst, welches zur Halterung der Profilkörper dient. Darüber hinaus kann diese Unterkonstruktion allerdings auch in einfacher Weise dazu verwendet werden, ein oder mehrere Verkleidungselemente neben den Profilkörpern anzuordnen. Diese Verkleidungselemente können bspw. aus Holz oder anderen Materialien bestehen, so dass insgesamt die Versorgungseinrichtung in Form einer großflächigen Holzwand realisiert werden kann, was optisch ansprechend ist und dem Raum in dem die Einrichtung angeordnet ist, eine angenehme Atmosphäre verleiht.

An der Oberseite der Versorgungseinrichtung kann ferner auch ein Beleuchtungselement mit mindestens einer Lichtquelle angeordnet sein, welches zur Raumbeleuchtung und/oder zur Beleuchtung bestimmter Bereiche, beispielsweise eines Stellplatzes für ein Krankenbett dient.

Üblicherweise ist die erfindungsgemäße Versorgungseinrichtung fest an einer Wand eines Raumes befestigt. Es wäre allerdings auch denkbar, diese an einem Wandelement zu befestigen, welches wiederum gegenüber einer Wand eines Raumes, in dem die Einrichtung angeordnet ist, schwenkbar gelagert ist. Die erfindungsgemäße Versorgungseinrichtung könnte in diesem Fall auch als Raumteiler eingesetzt werden, der je nach Bedarf verschwenkt werden kann. In diesem Fall könnte insbesondere auch vorgesehen sein, zu beiden Seiten des schwenkbaren Wandelements Anschlusselemente für die Versorgungsmedien vorzusehen.

Nachfolgend soll die Erfindung anhand der beiliegenden Zeichnung näher erläutert werden. Es zeigen:
- Fig. 1: ein Ausführungsbeispiel der vorliegenden Erfindung in Form einer medizinischen Versorgungseinrichtung in Aufsicht;
- Fig. 2: einen Schnitt A-A aus Fig. 1;
- Fig. 3: ein Profilelement zum Bilden einer Unterkonstruktion im Schnitt;
- Fig. 4a und 4b: die zwei zur Lagerung der Anschlusseinrichtüngen und Anschlusselemente für die Versorgungsmedien dienenden Profilelemente im Schnitt;
- Fig. 5: die Anordnung der Profilelemente an einer Wand bzw. einem Wandelement sowie die Anordnung der Anschlusseinheiten und Anschlusselemente im Schnitt;
- Fig. 6: die Anordnung der beiden Profilelemente und einer Anschlüsseinrichtung für Starkstrom im Querschnitt;
- Fig. 7 und 8: eine weitere Möglichkeit zur Befestigung der Profilelemente an einem Wandelement und
- Fig. 9: eine Variante der in den Fig. 7 und 8 dargestellten Profilelementehalterung.

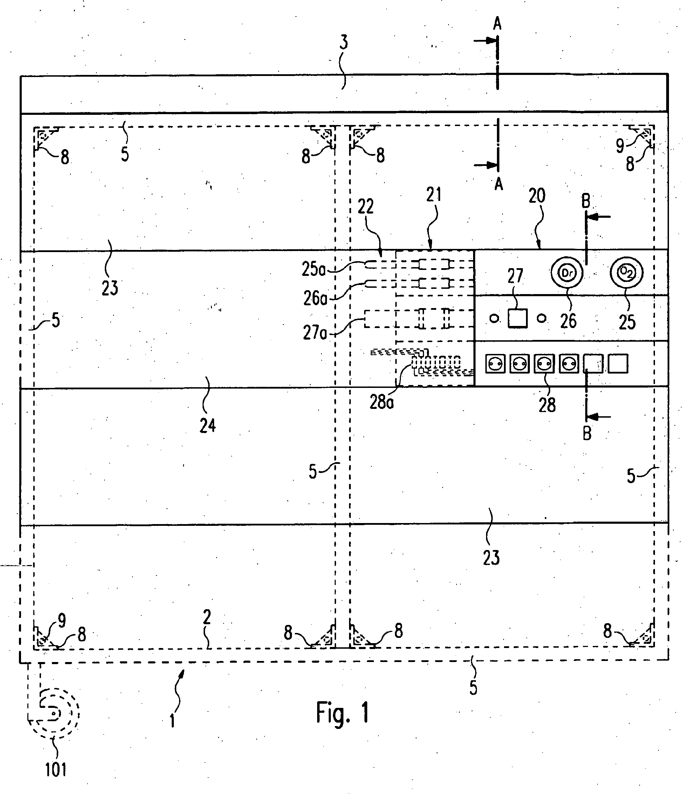

Fig. 1 zeigt ein Ausführungsbeispiel der erfindungsgemäßen Versorgungseinrichtung, welche im dargestellten Beispiel für die Verwendung in Krankenhäusern vorgesehen ist. Die in Aufsicht dargestellte Versorgungseinrichtung 1 dient dazu, technische Gase und andere Medien, die bei einer Patientenbehandlung häufig benötigt werden, zur Verfügung zu stellen, und weist hierfür einerseits Anschlüsse 25 und 26 für Sauerstoff und Druckluft sowie andererseits Anschlüsse 27 und 28 für Schwachstrom und Starkstrom auf. Die entsprechenden Anschlüsse und Anschlusseinheiten sind in einer mit dem Bezugszeichen 20 versehenen sog. Versorgungseinheit angeordnet, welche Bestandteil der erfindungsgemäßen Versorgungseinrichtung 1 ist.

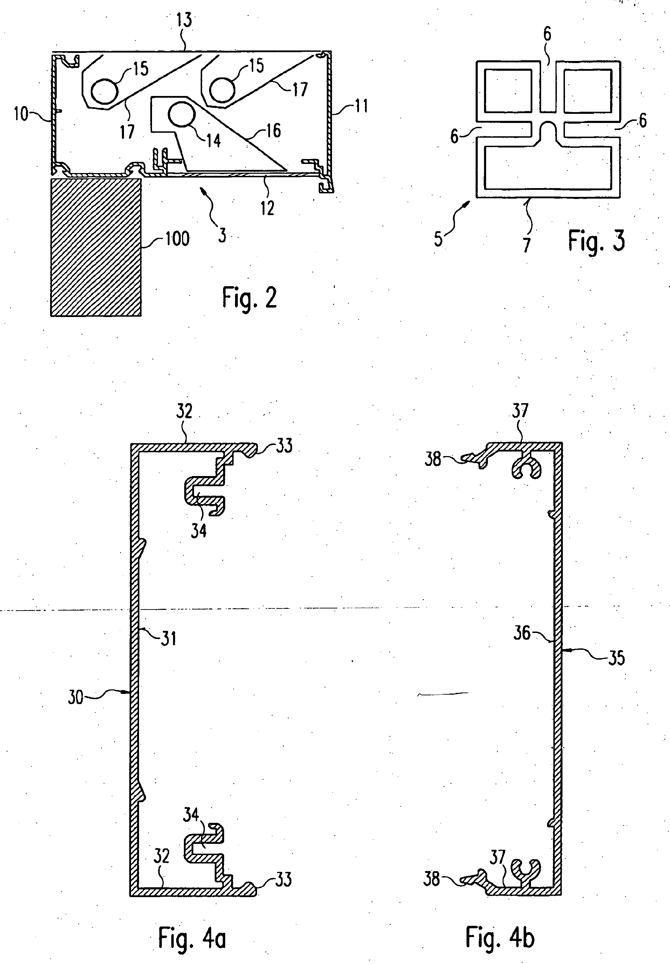

Insgesamt gesehen ist die Versorgungseinrichtung 1 als großflächiges Element ausgestaltet und weist hierfür zunächst eine sog. Unterkonstruktion 2 auf, über die die Versorgungseinrichtung 1 an einer Wand oder einem Wandelement befestigt wird. Die Unterkonstruktion 2 besteht aus mehreren Profilelementen 5, die zu dem in Fig. 1 in Strichlinien dargestellten Gerüst zusammengeschraubt sind. Die Ausgestaltung dieser Profilelemente im Schnitt kann Fig. 3 entnommen werden. Entsprechend dieser Garstellung sind die Profilelemente 5, bei denen es sich vorzugsweise um Aluminium-Strangpressprofile handelt, im Querschnitt gesehen quadratisch ausgebildet und weisen an drei ihrer Längsseiten durchgehende und zur Mitte gerichtete Schraubkanäle 6 auf. Diese Schraubkanäle 6 dienen nicht nur dazu, die Profilelemente 5 miteinander zu verbinden, sondern werden ferner auch dazu verwendet, weitere Elemente und Einrichtungen der erfindungsgemäßen Versorgungseinrichtung an der Unterkonstruktion 2 zu befestigen. An einer vierten Längsseite hingegen sind die Profilelemente 5 glatt ausgestaltet und weisen dementsprechend eine glatte Oberfläche 7 auf. Die dargestellte Ausgestaltung der Profilelemente 5 erlaubt es, diese jeweils identisch auszubilden und lediglich in der erforderlichen Länge abzulängen, ohne dass eine weitere mechanische Bearbeitung erforderlich wäre.

Wie der Darstellung in Fig. 1 zu entnehmen ist, erfolgt die Verbindung der Profilelemente 5 untereinander zu der Unterkonstruktion mit Hilfe von Befestigungswinkeln 8, die über die zuvor erwähnten Schraubkanäle 6 mit den Profilelementen 5 verschraubt sind. Die Befestigungswinkel 8 können ferner auch dazu verwendet werden, die Unterkonstruktion 2 als Ganzes an der Wand bzw. dem Wandelement zu befestigen, weshalb sie jeweils eine Bohrung 9 aufweisen, über die sie an die Wand geschraubt werden können. Die Ausgestaltung der Profilelemente 5 mit drei Schraubkanälen 6 und einer Flachseite 7 erlaubt es nunmehr, die Profilelemente 5 derart anzuordnen und zu orientieren, dass die Außenseite der Unterkonstruktion 2 eine geschlossene glatte Fläche aufweist. Die Befestigung der Unterkonstruktion 2 an der Wand bzw. dem Wandelement könnte im übrigen auch noch über separate Befestigungswinkel erfolgen, die allerdings in Fig. 1 nicht dargestellt sind und an jeder beliebigen Stelle der Profilelemente 5 angebracht werden können.

Wesentlicher Bestandteil der Versorgungseinrichtung 1 ist - wie bereits erwähnt - die Versorgungseinheit 20, welche die entsprechenden Anschlüsse 26 bis 28 für die technischen Gase sowie den Schwach- und Starkstrom aufweist. Seitlich von dieser Versorgungseinheit 20 befindet sich dann ein Anschlussbereich 21, über den die entsprechenden Versorgungsleitungen 25a, 26a, 27a und 28a für die Medien in die Versorgungseinheit 20 münden bzw. von dieser wegführen und in einen Einspeisebereich 22 geführt werden. In diesem Einspeisebereich 22 gehen dann die Versorgungsleitungen 25a, 26a, 27a und 28a in die Wand über und werden zu den entsprechenden zentralen Versorgungseinrichtungen des Gebäudes geführt.

Der erfindungsgemäßen Versorgungseinrichtung 1 wird dadurch ein optisch ansprechendes Aussehen verliehen, das diese großflächig ausgestaltet ist. Hierfür sind an der Unterkonstruktion 2 nicht nur die Versorgungseinheit 20 sondern darüber hinaus auch weitere Verkleidungselemente 23 aus Holz befestigt, welche bündig an die Versorgungseinheit 20 anschließen. Hierdurch wird eine großflächige Holzvertäfelung geschaffen, durch die dem Raum, in dem die Einrichtung angeordnet ist, ein angenehmeres Aussehen und eine wärmere Atmosphäre verliehen wird. Die Verkleidungselemente 23 werden hierbei wiederum an der Unterkonstruktion 2 befestigt, die somit als zentrales Gerüst der erfindungsgemäßen Versorgungseinrichtung 1 dient.

Das seitlich von der Versorgungseinheit 20 angeordnete Verkleidungselement 24 weist darüber hinaus noch die Besonderheit auf, dass es relativ einfach aufsetzbar und entfernbar ist. Der Grund hierfür ist, dass der Einspeisebereich 22 und der Anschlussbereich 21 möglichst einfach zugänglich sein sollten, um das Durchführen von Wartungsarbeiten und Reparaturen zu vereinfachen. Das Verkleidungselement 24 dient somit als sog. Revisionsklappe, die in einfacher und schneller Weise mittels eines Werkzeugs, bspw. eines Blechhebers von der Unterkonstruktion 2 entfernt werden kann. Nach Durchführung der Wartungsarbeiten kann dann das Verkleidungselement 24 wieder auf die Unterkonstruktion 2 aufgesetzt und mit dieser bspw. verrastet werden.

Ergänzend ist anzumerken, das anstelle der beschriebenen Holzverkleidungen auch andere Materialien zum Einsatz kommen könnten. Wesentlich ist, dass diese in einfacher und schneller Weise an der Unterkonstruktion 2 befestigt werden können. Ferner könnte die Anordnung der Versorgungseinheit 2 sowie der weiteren Elemente auch je nach Bedarf variiert werden, was aufgrund der Ausgestaltung mit der Unterkonstruktion 2 als Traggerüst sehr einfach zu realisieren ist.

Wie in Fig. 1 ferner noch dargestellt, ist an der Oberseite der Versorgungseinrichtung eine Beleuchtungseinheit 3 angeordnet, deren nähere Ausgestaltungen der Schnittdarstellung in Fig. 2 entnommen werden kann. Die Beleuchtungseinheit 3 befindet sich an der Oberseite der Unterkonstruktion 2 oder eines Wandelements 100 und besteht aus einem aus zwei Profilteilen 10 und 11 gebildeten länglichen Gehäuse, welches an seiner Unter- und Oberseite jeweils durch eine lichtdurchlässige Scheibe 12 bzw. 13 abgeschlossen ist. Innerhalb des Gehäuses befinden sich mehrere Lichtquellen 14 und 15, die jeweils mittels ihnen zugeordneter Reflektoren 16 und 17 Licht zur Unterseite hin, also bspw. auf den Padentenbereich, sowie zur Oberseite hin zur Indirektbeleuchtung des Raumes abgeben. Hierbei kann insbesondere vorgesehen sein, die Lichtquellen 14 und 15 einzeln aktivierbar zu gestalten, um je nach Bedarf eine bestimmte Beleuchtung einstellen zu können. Die Beleuchtungseinheit 3'ist darüber hinaus konstruktiv derart ausgelegt, dass an ihrer Unterseite Einbauteile wie Steckdosen und Schalter für z.B. Schwesternrufe angebracht werden können.

Die erfindungsgemäße Versorgungseinrichtung zeichnet sich dadurch aus, dass insbesondere die wesentlichen Komponenten zur Bereitstellung der Versorgungsmedien derart gelagert und montiert sind, dass sie auf einfache Weise zugänglich sind und dementsprechend schnell Wartungsarbeiten durchgeführt werden können. Die Halterung bzw. Montage dieser wesentlichen Komponenten erfolgt mit Hilfe zweier Profilkörper, die im Schnitt in den Fig. 4a und 4b dargestellt sind.

Ein erster, in Fig. 4a dargestellter Profilkörper 30 ist dabei zur Befestigung an der Unterkonstruktion 2 oder alternativ dazu auch zur unmittelbaren Befestigung an einer Wand vorgesehen und im Querschnitt gesehen U-förmig ausgestaltet. An seine Bodenfläche 31 schließen sich seitliche Wände 32 an, die einen zur Vorderseite hin halboffenen Raum bilden, der zur Aufnahme von Anschlusseinheiten für die verschiedenen Versorgungsmedien vorgesehen ist und in den Zuführungen für die verschiedenen Anschlusseinheiten münden. An ihren Vorderkanten weisen die Seitenwände 32 jeweils entsprechende Rastnasen 33 auf, die zur Verrastung mit dem in Fig. 4b dargestellten zweiten Profilkörper 35 vorgesehen ist. Anzumerken ist, dass sich von den Seiten 32 des Profilkörpers 30 noch zwei profilierte Bereiche zur Innenseite erstrecken, die zwei längliche Schraubkanäle 34 bilden, welche wie später noch erläutert wird - zur Halterung eines Zwischenträgers verwendet werden können.

Der in Fig. 4b dargestellte zweite Profilkörper 35 ist im wesentlichen komplementär zu dem ersten Profilkörper 30 ausgestaltet und ebenfalls U-förmig ausgebildet. Von einer Bodenfläche 36, deren Außenseite die Außenfläche der Versorgungseinheit 20 bildet, erstrecken sich wiederum Seitenwände 37, die an ihren Kanten Rastelemente 38 aufweisen, die mit den entsprechenden Rastnasen des ersten Profilkörpers 30 zusammenwirken. Zur Abdeckung des durch den ersten Profilkörpers 30 gebildeten halboffenen Raums wird somit der zweite Profilkörper in einfacher Weise auf den ersten Körper 30 aufgeklippst, was insbesondere in vorteilhafter Weise werkzeuglos erfolgen kann. Dabei ist die Verrastung allerdings derart ausgestaltet, dass ein Lösen der Verrastung und damit ein Abnehmen des zweiten Profilkörpers 35 von dem ersten entsprechend den hierfür vorgesehenen Normen lediglich mittels eines Werkzeugs bspw. eines Blechhebers erfolgen kann.

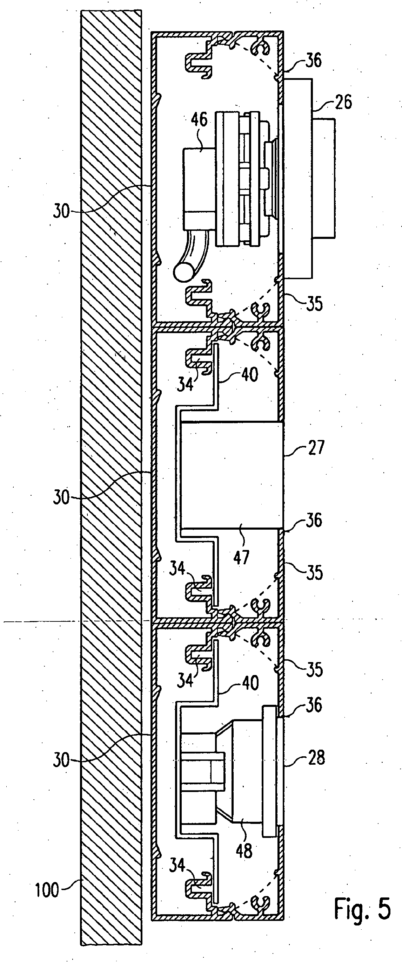

Die Anordnung der verschiedenen Anschlusseinheiten und Anschlusselemente in den durch die ersten und zweiten Profilkörper gebildeten Räumen kann nunmehr Fig. 5 entnommen werden, die den Schnitt B-B von Fig. 1 zeigt. Die in Fig. 5 dargestellte Ausführungsform weist dabei drei erste Profilkörper 30 auf, die übereinander angeordnet sind und jeweils zur Aufnahme der Anschlusseinrichtungen für Druckluft 46, Schwachstrom 47 und Starkstrom 48 vorgesehen sind. Die Anschlusseinheiten 46 bis 48 können dabei unmittelbar oder mit Hilfe eines Zwischenträgers 40 an dem ersten Profilkörper 30 befestigt sein. Die Befestigung dieses Zwischenträgers 40, der im dargestellten Ausführungsbeispiel für die Montage der Anschlusseinheiten für Schwachstrom 47 und Starkstrom 48 vorgesehen ist, kann hierbei mit Hilfe der bereits zuvor angesprochenen Schraubkanäle 34 in der Profilierung der ersten Profilkörper 30 erfolgen.

An der Vorderseite der Anschlusseinheiten 46 bis 48 befinden sich die entsprechenden Anschlusselemente 26 bis 48, über welche die bereitgestellten Versorgungsmedien entnommen werden können. Hierbei handelt es sich bspw. um einen Anschluss 26 zum Anschließen eines Druckluftschlauches sowie um Stecker bzw. Steckdosen 27 und 28 für das Anschließen von Schwachstrom- und Starkstromkabel. Insbesondere die beiden letztgenannten Anschlusselemente 27 und 28 sind dabei derart ausgeführt, dass sie bündig mit der Bodenfläche 36 der zweien Profilkörper 35 abschließen, so dass eine im wesentlichen glatte Oberfläche gebildet wird. Der Anschluss 26 für die Druckluft hingegen steht gegenüber der Bodenfläche 36 des zweiten Profilkörpers 35 leicht hervor, wodurch eine einfachere Handhabung ermöglicht wird.

Wie der Darstellung in Fig. 5 ferner entnommen werden kann, weisen die Bodenflächen 36 der zweiten Profilkörper 35 an die Anschlusseinheiten 46 bis 48 bzw. an die Anschlusselemente 26 bis 28 angepaßte Durchbrüche auf, über welche der Zugang zu den Medien ermöglicht wird.

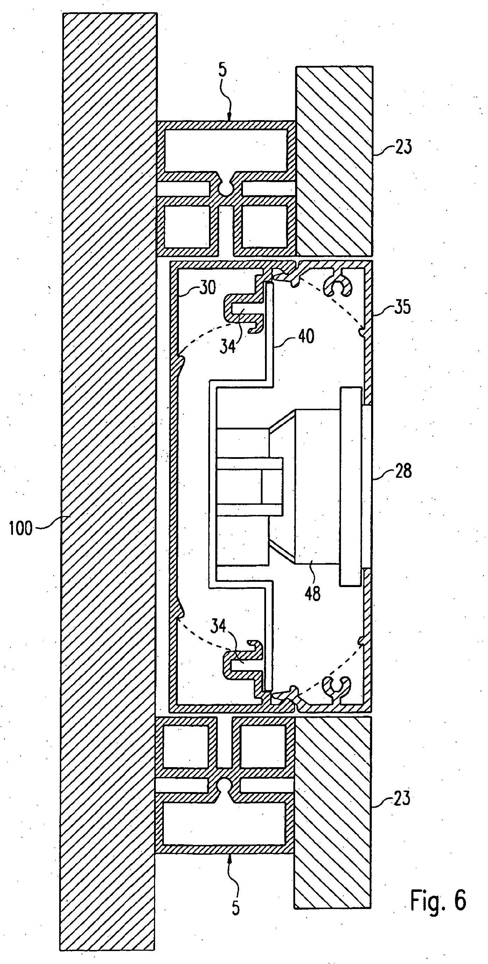

Fig. 6 zeigt ein weiteres Ausführungsbeispiel der erfindungsgemäßen Anordnung einer Anschlusseinheit 48 für Starkstrom mit Hilfe der beiden erfindungsgemäßen Profilkörper 30 und 35. Dieser Darstellung kann ferner auch die Anordnung der Profilkörper 30 und 35 an den Profilelementen 5 der Unterkonstruktion 2 entnommen werden. Hierbei ist von Bedeutung, dass die Vorderkante der Seitenwände 32 des ersten Profilkörpers 30 bündig mit den Profilelementen 5 der Unterkonstruktion abschließen. Hierdurch bestünde die Möglichkeit, den ersten Profilkörper 30 auch mit einem großflächigen Element zu überdecken.

Eine weitere Besonderheit besteht auch darin, dass die seitlich von den Profilkörpern 30 bzw. 35 angeordneten Verkleidungselemente 23 derart in ihrer Dicke bemessen sind, dass sie ebenfalls bündig mit der Bodenfläche 36 des zweiten Profilkörpers 35 abschließen. Hierdurch wird insgesamt gesehen eine große aber im wesentlichen glatte Oberfläche geschaffen.

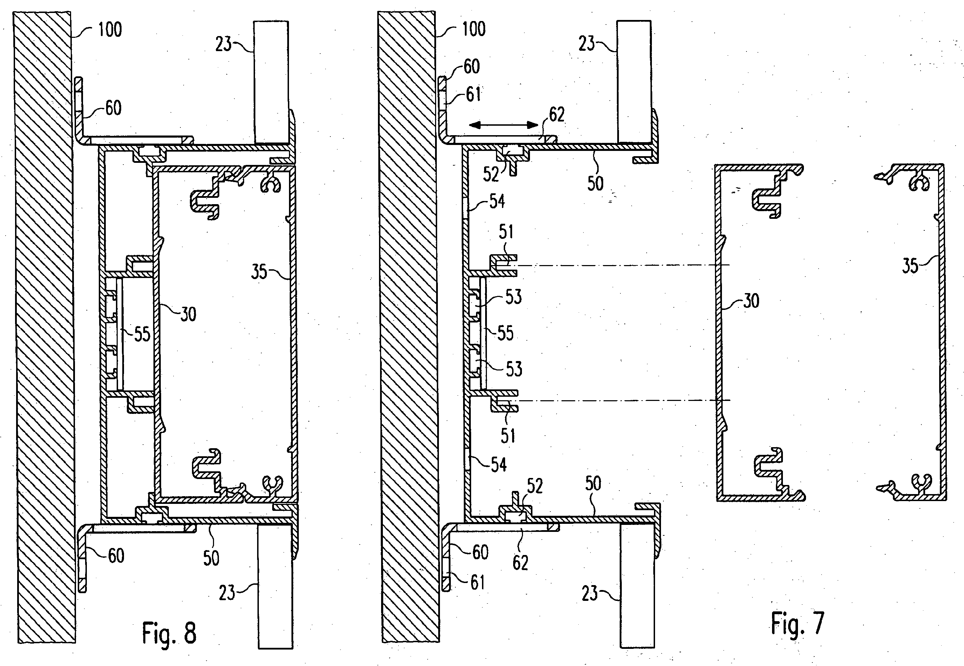

Wie bereits zuvor erwähnt wurde, wäre es denkbar, die ersten Profilkörper 30 unmittelbar an einem Wandelement 100 zu befestigen. Eine weitere Möglichkeit besteht allerdings auch darin, anstelle der Unterkonstruktion 2 einen Zwischenmontagekörper zu verwenden, wie er in den Fig. 7 bzw. 8 dargestellt ist. Genaugenommen wird dieser Zwischenkörper durch zwei Profilteile 50 gebildet, die über zwei Schraubwinkel bzw. Stege 60 mit dem Wandelement 100 verschraubt sind. Beide Profilteile 50 sind winkelartig ausgebildet und weisen an ihrer Bodenfläche jeweils eine Profilierung zur Bildung eines Schraubkanals 51 auf, über den der erste Profilkörper 30 befestigt werden kann. An ihrer zweiten Seite hingegen sind weitere Schraubkanäle 52 vorgesehen, über welche eine Befestigung an den Schraubwinkeln bzw. Stegen 60 erfolgt. Diese weisen zum einen eine Bohrung 61 zur Befestigung an dem Wandelement 100 sowie ein Langloch 62 auf, über welche die Verschraubung mit den Elementen 50 erfolgt. Die Verwendung des Langlochs 62 gestattet es dabei, die Profilteile 50 in einem gewünschten Abstand von der Oberfläche des Wandelements anzuordnen, so dass eine variable Anordnung der Profilkörper 30 und 35 und damit letztendlich der darin angeordneten Versorgungseinrichtungen erzielt wird.

Die Verbindung der beiden Profilteile 50 erfolgt mit Hilfe eines Trägers 55, der wiederum mit zwei weiteren Schraubkanälen 53 der beiden Profilteile 50 verschraubt ist. Hierdurch wird eine ausreichende Stabilität zur Halterung der verschiedenen Elemente der erfindungsgemäßen Versorgungseinrichtung geschaffen. Alternativ zu der Befestigung der Profilteile 50 mit Hilfe der beiden Schraubwinkel 60 bestünde auch die Möglichkeit, beide Elemente unmittelbar an der Wandoberfläche 100 zu befestigen, was durch weitere Bohrungen 54 in den Bodenflächen der Profilteile 50 erzielt wird.

Fig. 8 zeigt dann letztendlich die sich hierbei ergebende Anordnung sämtlicher Elemente im montierten Zustand, wobei auf die Darstellung der Anschlusseinrichtungen für die Versorgungsmedien verzichtet wurde.

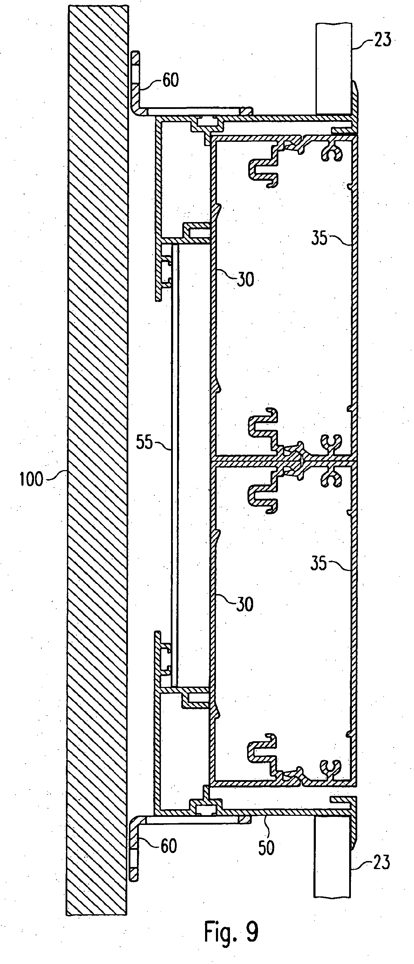

Die in den Fig. 7 und 8 dargestellte Vorgehensweise zur Halterung der Profilkörper 30 und 35 kann auch durch die gleichzeitige Halterung mehrerer übereinander angeordneter Profilkörper 30, 35 erweitert werden, wie in Fig. 9 dargestellt ist. Dies wird in einfacher Weise dadurch erreicht, dass die beiden Profilteile 50 weiter beabstandet voneinander angeordnet werden, wobei dieser Abstand so bemessen ist, dass nunmehr zwei erste Profilkörper 30 übereinander angeordnet werden können. Die Länge des Trägers 55 zur Verbindung der beiden Profilteile 50 wird in diesem Fall ebenfalls an den verlängerten Abstand angepasst.

Durch die erfindungsgemäße Ausgestaltung der beiden Profilkörper wird somit die Möglichkeit geschaffen, in einfacher Weise die zur Bereitstellung der verschiedenen Versorgungsmedien erforderlichen Komponenten anzuordnen und zu montieren. Ferner können die zweiten Profilkörper auf schnelle Weise von dem ersten Profilkörper abgenommen werden, so dass erforderliche Wartungsarbeiten sehr einfach und schnell durchgeführt werden können.

Abschließend soll noch eine Erweiterung der in Fig. 1 dargestellten Versorgungseinrichtung erwähnt werden, die darin besteht, dass diese gegenüber der Wand eines Raumes, in dem diese angeordnet ist, schwenkbar gestaltet ist. Die erfindungsgemäße Versorgungseinrichtung 1 ist hierfür insgesamt gesehen an einem durch die Unterkonstruktion 2 gebildeten Wandelement befestigt, welches an einer der beiden Seiten über ein oder mehrere Schwenkscharniere mit einer Wand eines Raumes befestigt ist. An der gegenüberliegenden Seite dieses in Fig. 1 nicht dargestellten Schwenkscharniers ist dann das in Fig. 1 optional dargestellte, arretierbare Rad 101 vorgesehen, über welches ein einfaches Verschwenken der Gesamtanordnung ermöglicht wird und welches die Anordnung auch im ausgeschwenkten Zustand abstützt. Diese erweiterte Ausgestaltung ist insbesondere dann sinnvoll, wenn die Versorgungseinrichtung gleichzeitig auch als Raumteiler eingesetzt wird, um bspw. zwei benachbarte Patientenbetten innerhalb eines Raumes voneinander abzutrennen. In diesem Fall kann auch vorgesehen sein, dass zu beiden Seiten des Wandelements die verschiedenen Anschlüsse für die Versorgungsmedien bereit gestellt werden, so dass die zu beiden Seiten der Einrichtung angeordneten Betten mit den Medien versorgt werden können.

## Patentansprüche

1. Versorgungseinrichtung (1) zur Bereitstellung von Versorgungsmedien, insbesondere von technischen Gasen und/oder Strom, mit
einem ersten Profilkörper (30), der zur mittelbaren oder unmittelbaren Befestigung an einer Wand oder einem Wandelement (100) ausgebildet ist und einen halboffenen Raum bildet, in den Zuführungen (25a, 26a, 27a, 28a) für Anschlußeinheiten (46, 47, 48) für die Versorgungsmedien münden, sowie
einem zweiten Profilkörper (35), der komplementär zu dem ersten Profilkörper (30) ausgestaltet ist und zur Abdeckung des halboffenen Raums mit dem ersten Profilkörper (30) werkzeuglos verrrastbar ist, wobei eine Bodenfläche (36) des zweiten Profilkörpers (35) Durchbrüche zur Anordnung von Anschlußelementen (25, 26, 27, 28) der Anschlußeinheiten (46, 47, 48) aufweist,
mit
eine Unterkonstruktion (2), über welche der erste Profilkörper (30) an einer Wand oder einem Wandelement (100) befestigt ist,
wobei die Unterkonstruktion (2) aus mehreren zusammengefügten länglichen Profilelementen (5) besteht.

2. Versorgungseinrichtung nach Anspruch 1,
**dadurch gekennzeichnet,**
**dass** der erste und zweite Profilkörper (30, 35) im Querschnitt gesehen U-förmig ausgestaltet sind.

3. Versorgungseinrichtung nach Anspruch 1 oder 2,
**dadurch gekennzeichnet,**
**dass** das Anschlußelement (25, 26, 27, 28) bündig mit der Bodenfläche (36) des zweiten Profilkörpers (35) abschließt.

4. Versorgungseinrichtung nach Anspruch 1 oder 2,
**dadurch gekennzeichnet,**
**dass** das Anschlußelement (25, 26, 27, 28) über die Bodenfläche (36) des zweiten Profilkörpers (35) hervorsteht.

5. Versorgungseinrichtung nach einem der vorherigen Ansprüche,
**dadurch gekennzeichnet,**
**dass** der erste und zweite Profilkörper (30, 35) Rastelemente (33, 38) zum gegenseitigen Verrasten aufweisen.

6. Versorgungseinrichtung nach einem der vorherigen Ansprüche,
**dadurch gekennzeichnet,**
**dass** die Anschlußeinheiten (46, 47, 48) unmittelbar an dem ersten Profilkörper (30) befestigt sind.

7. Versorgungseinrichtung nach einem der Ansprüche 1 bis 5,
**dadurch gekennzeichnet,**
**dass** die Anschlußeinheiten (46, 47, 48) mittels eines Zwischenträgers (40) an dem ersten Profilkörper (30) befestigt sind.

8. Versorgungseinrichtung nach Anspruch 7,
**dadurch gekennzeichnet,**
**dass** der Zwischenträger (40) mit dem ersten Profilkörper (30) verschraubt ist.

9. Versorgungseinrichtung nach einem der vorherigen Ansprüche,
**dadurch gekennzeichnet,**
**dass** die Profilelemente (5) miteinander verschraubt sind.

10. Versorgungseinrichtung nach Anspruch 9,
**dadurch gekennzeichnet,**
**dass** die Profilelemente (5) im Schnitt gesehen quadratisch ausgebildet sind und an drei ihrer Längsseiten Schraubkanäle (6) aufweisen.

11. Versorgungseinrichtung nach einem der vorherigen Ansprüche,
**gekennzeichnet durch**
mindestens ein Verkleidungselement (23), welches neben dem ersten und zweiten Profilkörper (30, 35) angeordnet ist.

12. Versorgungseinrichtung nach einem der Ansprüche 1 bis 10 und Anspruch 11,
**dadurch gekennzeichnet,**
**dass** das Verkleidungselement (23) ebenfalls an der Unterkonstruktion (2) befestigt ist.

13. Versorgungseinrichtung nach Anspruch 11 oder 12,
**dadurch gekennzeichnet,**
**dass** das Verkleidungselement (23) bündig mit einer Bodenfläche (36) des zweiten Profilkörpers (35) abschließt.

14. Versorgungseinrichtung nach Anspruch 13,
**dadurch gekennzeichnet,**
**dass** das Verkleidungselement (23) aus Holz besteht.

15. Versorgungseinrichtung nach einem der vorherigen Ansprüche,
**dadurch gekennzeichnet,**
**dass** an der Oberseite der Versorgungseinrichtung ein Beleuchtungselement (10) mit mindestens einer Lichtquelle angeordnet ist.

16. Versorgungseinrichtung nach einem der vorherigen Ansprüche,
**dadurch gekennzeichnet,**
**dass** diese an einem Wandelement (100) befestigt ist, welches gegenüber einer Wand eines Raumes, in dem die Versorgungseinrichtung (1) angeordnet ist, schwenkbar gelagert ist.

17. Versorgungseinrichtung nach Anspruch 16,
**dadurch gekennzeichnet,**
**dass** die Versorgungseinrichtung zu beiden Seiten des schwenkbaren Wandelements (100) Anschlußelemente (25, 26, 27, 28) für die Versorgungsmedien aufweist.

## Claims

1. Supply device (1) for the provision of supply media, in particular industrial gases and/or current, with
a first profile body (30), which is designed for direct or indirect attachment to a wall or a wall element (100), and forms a semi-open space into which supply lines (25a, 26a, 27a, 28a) flow for connection units (46, 47, 48) for the supply media, as well as
a second profile body (35) which is configured to be complementary to the first profile body (30) and to cover the semi-open space with the first profile body (30) in a lockable manner without tools, wherein a bottom surface (36) of the second profile body (35) has openings for the arrangement of connection elements (25, 26, 27, 28) of the connection units (46, 47, 48), and with
a substructure (2) via which the first profile body (30) is fixed to a wall or a wall element (100),
wherein the substructure (2) consists of several oblong profile elements (5) assembled together.

2. Supply device according to claim 1,
**characterized in that,**
the first and second profile bodies (30, 35) are U-shaped in form when viewed in cross-section.

3. Supply device according to claim 1 or 2,
**characterized in that,**
the connecting element (25, 26, 27, 28) is flush with the bottom surface (36) of the second profile body (35).

4. Supply device according to claim 1 or 2,
**characterized in that,**
the connecting element (25, 26, 27, 28) protrudes over the bottom surface (36) of the second profile body (35).

5. Supply device according to one of the preceding claims, **characterized in that,**
the first and second profile body (30, 35) comprise latching elements (33, 38) for mutual latching.

6. Supply device according to one of the preceding claims, **characterized in that,**
the connection units (46, 47, 48) are fixed directly on the first profile body (30).

7. Supply device according to one of the claims 1 to 5,
**characterized in that,**
the connection units (46, 47, 48) are attached to the first profile body (30) by means of an intermediate support (40).

8. Supply device according to claim 7,
**characterized in that,**
the intermediate support (40) is screwed to the first profile body (30).

9. Supply device according to one of the preceding claims, **characterized in that,**
the profile elements (5) are screwed together.

10. Supply device according to claim 9,
**characterized in that,**
the profile elements (5) are square in form when viewed in cross-section, and have screw channels (6) on three of their longitudinal sides.

11. Supply device according to one of the preceding claims, **characterized in that,**
at least one lining element (23) is arranged next to the first and second profile bodies (30, 35).

12. Supply device according to one of the claims 1 to 10 and claim 11,
**characterized in that,**
the lining element (23) is also attached to the substructure (2).

13. Supply device according to claim 11 or 12,
**characterized in that,**
the lining element (23) is welded flush with a bottom surface (36) of the second profile body (35).

14. Supply device according to claim 13,
**characterized in that,**
the lining element (23) is made of wood.

15. Supply device according to one of the preceding claims, **characterized in that,**
a lighting element (10) with at least one light source is arranged on the upper side of the supply device.

16. Supply device according to one of the preceding claims, **characterized in that,**
it is attached to a wall element (100), which is supported against a wall of a space, in which the supply means (1) is pivotably arranged.

17. Supply device according to claim 16,
**characterized in that,**
the supply device comprises connection elements (25, 26, 27, 28) for the supply media on both sides of the pivotable wall element (100).

## Revendications

1. Dispositif d'alimentation (1) pour la mise à disposition de fluides d'alimentation, plus particulièrement de gaz techniques et/ou de courant, avec un premier corps profilé (30), qui est conçu pour la fixation indirecte ou directe à une paroi ou à un élément de paroi (100) et qui forme un espace semi-ouvert, qui débouche dans les conduites d'amenée (25a, 26a, 27a, 28a) pour des unités de raccordement (46, 47, 48) pour les fluides d'alimentation, et
un deuxième corps profilé (35) qui est conçu de façon à être complémentaire par rapport au premier corps profilé (30) et qui peut être encliqueté sans outil avec le premier corps profilé (30) pour le recouvrement de l'espace semi-ouvert, une surface de fond (36) du deuxième corps profilé (35) présentant des passages pour la disposition d'éléments de raccordement (25, 26, 27, 28) des unités de raccordement (46, 47, 48),
avec une infrastructure (2) par l'intermédiaire de laquelle le premier corps profilé (30) est fixé à une paroi ou à un élément de paroi (100),
l'infrastructure (2) étant constituée de plusieurs éléments profilés (5) oblongs assemblés.

2. Dispositif d'alimentation selon la revendication 1,
**caractérisé en ce que**
le premier et le deuxième corps profilés (30, 35) présentent une section transversale en forme de U.

3. Dispositif d'alimentation selon la revendication 1 ou 2,
**caractérisé en ce que**
l'élément de raccordement (25, 26, 27, 28) est disposé en affleurement avec la surface de fond (36) du deuxième corps profilé (35).

4. Dispositif d'alimentation selon la revendication 1 ou 2,
**caractérisé en ce que**
l'élément de raccordement (25, 26, 27, 28) dépasse au-dessus de la surface de fond (36) du deuxième corps profilé (35).

5. Dispositif d'alimentation selon l'une des revendications précédentes,
**caractérisé en ce que**
le premier et le deuxième corps profilés (30, 35) comprennent des éléments d'encliquetage (33, 38) pour un encliquetage mutuel.

6. Dispositif d'alimentation selon l'une des revendications précédentes,
**caractérisé en ce que**
les unités de raccordement (46, 47, 48) sont fixées directement sur le premier corps profilé (30).

7. Dispositif d'alimentation selon l'une des revendications 1 à 5,
**caractérisé en ce que**
les unités de raccordement (46, 47, 48) sont fixées au moyen d'un support intermédiaire (40) sur le premier corps profilé (30).

8. Dispositif d'alimentation selon la revendication 7,
**caractérisé en ce que**
le support intermédiaire (40) est vissé avec le premier corps profilé (30).

9. Dispositif d'alimentation selon l'une des revendications précédentes,
**caractérisé en ce que**
les éléments profilés (5) sont vissés entre eux.

10. Dispositif d'alimentation selon l'une des revendications précédentes,
**caractérisé en ce que**
les éléments profilés (5) présentent une section transversale de forme carrée et comprennent, au niveau de leurs côtés longitudinaux, des canaux de vissage (6).

11. Dispositif d'alimentation selon l'une des revendications précédentes,
**caractérisé par**
au moins un élément de carénage (23), qui est disposé à proximité du premier et du deuxième corps profilés (30, 35).

12. Dispositif d'alimentation selon l'une des revendications 1 à 10 et la revendication 11,
**caractérisé en ce que**
l'élément de carénage (23) est également fixé à l'infrastructure (2).

13. Dispositif d'alimentation selon la revendication 11 ou 12,
**caractérisé en ce que**
l'élément de carénage (23) est disposé en affleurement avec une surface de fond (36) du deuxième corps profilé (35).

14. Dispositif d'alimentation selon la revendication 13,
**caractérisé en ce que**
l'élément de carénage (23) est constitué de bois.

15. Dispositif d'alimentation selon l'une des revendications précédentes,
**caractérisé en ce que**
sur le côté supérieur du dispositif d'alimentation, se trouve un élément d'éclairage (10) avec au moins une source de lumière.

16. Dispositif d'alimentation selon l'une des revendications précédentes,
**caractérisé en ce que** celui-ci est fixé à un élément de paroi (100), qui est logé de manière pivotante par rapport à un mur d'une pièce, dans laquelle le dispositif d'alimentation (1) est disposé.

17. Dispositif d'alimentation selon la revendication 16,
**caractérisé en ce que**
le dispositif d'alimentation comprend, des deux côtés de l'élément de paroi pivotante (100) des éléments de raccordement (25, 26, 27, 28) pour les fluides d'alimentation.
